# EUROPÄISCHE PATENTSCHRIFT

(11) **EP 0 623 483 B1**
(45) Veröffentlichungstag und Bekanntmachung des Hinweises auf die Patenterteilung: **04.12.1996**
(21) Anmeldenummer: 94104758.1
(22) Anmeldetag: 25.03.1994
(51) Int. Cl.: B60G 21/055, F16F 13/00, F16C 27/06, F16C 33/74, F16C 33/10, F16C 11/04

(54) **Kunststofflager für Stabilisatoren in Kraftfahrzeugen**
Plastic bearing for stabilizers in automotive vehicles
Palier en matière plastique pour barres stabilisatrices dans véhicules automobiles

(30) Priorität: 21.04.1993 DE 4312958
(43) Veröffentlichungstag der Anmeldung: 09.11.1994
(73) Patentinhaber: LEMFOERDER METALLWAREN AG., D-49441 Lemförde (DE)
(72) Erfinder: Jördens, Ernst-Günter, Dipl.-Ing., D-49401 Damme (DE); Kammel, Helmut, Dipl.-Ing., D-49401 Damme (DE)
(74) Vertreter: Bruse, Willy Hans Heinrich

(56) Entgegenhaltungen:
- DE-A- 1 400 969
- DE-A- 1 425 047
- DE-A- 2 920 404
- DE-A- 3 531 340
- DE-A- 4 204 252
- DE-C- 4 036 051
- FR-A- 1 545 474
- FR-A- 2 657 564
- US-A- 3 380 791
- US-A- 4 916 749

## Beschreibung

Die Erfindung betrifft eine Lagerung für Stabilisatoren in Kraftfahrzeugen, bei dem ein Kunststofflager aus einem elastisch verformbaren Werkstoff nach dem Oberbegriff des Patentanspruches 1 vorgesehen ist.

Aus der DE-OS 29 20 404 ist ein solches Kunststofflager bekannt, bei dem ein in Längsrichtung durchgehender Schnitt durch den Lagerkörper das Öffnen des Lagerkörpers und dessen Montage auf dem Stabilisator ermöglicht. Infolge seiner Materialelastizität schließt der Lagerkörper sich nach dem Aufsetzen auf den Stabilisator, so daß er diesen ringförmig umgibt. Ein solches Kunststofflager wird durch ein zum Beispiel bügelförmiges Gehäuse gehalten, welches lösbar mit dem Fahrzeugchassis verbunden ist. Es kombiniert die Vorteile eines Molekularlagers mit einem dauergeschmierten Gleitlager in einer für die Montage an einem Stabilisator eines Kraftfahrzeuges geeigneten Bauweise.

Aus der DE-PS 35 31 340 ist ein Stabilisatorlager bekannt, welches in einer sich durch die Längsachse des Lagers erstreckenden Ebene vollständig in zwei Lagerhälften geteilt ist und bei dem die Gleitfläche am Außenumfang eines elastomeren Körpers vorgesehen ist, so daß zusätzlich eine diesen elastomeren Körper umgebende, in ein Gehäuse eingesetzte Gleitbuchse erforderlich ist. Bekannt ist aus dieser Druckschrift außerdem die Verwendung von Versteifungseinlagen aus einem festen Werkstoff in dem elastomeren Werkstoff zur Beeinflussung der Verformungscharakteristik des Lagers. Zur Erzielung einer axial wirksamen Anschlaglage sind sowohl die Gleitbuchse an beiden Enden mit einem das Gehäuse einfassenden Radialflansch als auch der elastomere Körper und die darin eingebetteten Versteifungseinlagen an beiden Enden mit einem die Gleitbuchse einfassenden Radialflansch ausgestattet. Ein solches Stabilisatorlager genügt zwar höheren Ansprüchen, besteht aber aus mehr Einzelteilen als das zuvor erwähnte einteilige Kunststofflager.

Aufgabe der Erfindung ist es, eine Lagerung der eingangs genannten Gattung hinsichtlich der Kompensation von Schwingungen, insbesondere radialer Schwingungen, zu verbessern und die einteilige, kostengünstige Bauweise des Kunststofflagers dabei zu erhalten.

Die Erfindung löst diese Aufgabe durch die Ausbildungsmerkmale nach dem Patentanspruch 1.

Die angestrebte Wirkung wird durch eine solche Ausbildung besonders vollkommen erreicht.

Bei einer eventuell kugeligen Lagerausbildung wird der Innenkreisdurchmesser der Längsrippen in diametralen Schnittebenen größer gewählt als der Durchmesser der Radialwülste.

Vorteilhaft sind an jedem axialen Ende der Auflagefläche vier Dichtlippenringe vorgesehen, von denen die jeweils äußeren Dichtlippenringe bei doppelter Vorspannung das gleiche Verhältnis vom Durchmesser des Stabilisators zum Durchmesser der Dichtlippen und die mittleren Dichtlippenringe bei einfacher Vorspannung das gleiche Verhältnis vom Durchmesser der Radialwülste zum Durchmesser des Stabilisators aufweisen.

Auf der Zeichnung sind Ausführungsbeispiele der Erfindung dargestellt. Es zeigen:
- Figur 1: eine schematische Darstellung eines Stabilisators mit zwei Lagern,
- Figur 2: einen Querschnitt durch ein eingespanntes, montiertes Kunststofflager,
- Figur 3: einen Schnitt nach der Linie III - III in Figur 2,
- Figur 4: einen Querschnitt durch ein Kunststofflager eines gegenüber den Figuren 2 und 3 abgeänderten Ausführungsbeispieles,
- Figur 5: einen Schnitt nach der Linie V - V in Fig.4,
- Figur 6: einen im Maßstab vergrößerten Längsschnitt durch ein Kunststofflager gemäß Figur 5,
- Figur 7: im Maßstab gegenüber Figur 6 nochmals vergrößert eine Einzelheit der Dichtlippenausbildung,
- Figur 8: eine gegenüber Figur 7 im Maßstab weiter vergrößerte Einzelheit,
- Figur 9: einen Längsschnitt durch ein weiteres Ausführungsbeispiel eines Kunststofflagers mit axialen Anschlägen,
- Figur 10: einen Längsschnitt durch ein gegenüber Figur 9 abgeändertes Ausführungsbeispiel und
- Figur 11: einen Längsschnitt durch ein weiteres Ausführungsbeispiel eines Kunststofflagers mit innerer Anschlagbegrenzung.

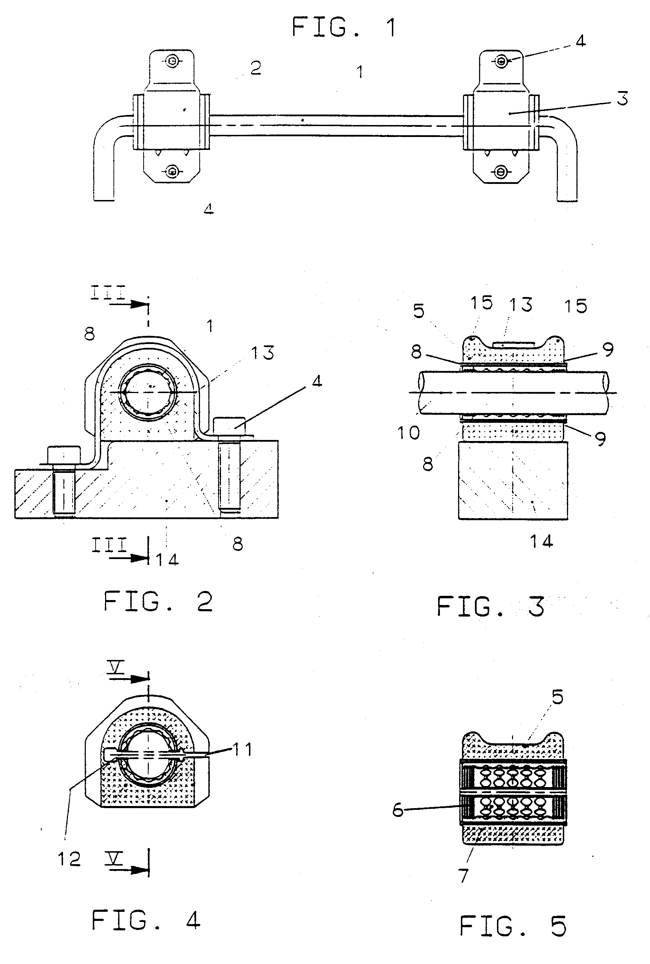

In der Figur 1 ist ein Stabilisator 1 eines Kraftfahrzeuges in zwei Stabilisatorlagern 2 und 3 abgestützt, die mittels Schrauben 4 am Fahrzeugchassis oder dergleichen befestigt sind.

Das Kunststofflager 5 ist einteilig ausgebildet und besteht aus einem elastomeren Werkstoff. Die Auflagefläche 6, welche gleichzeitig die Gleitfläche ist, befindet sich an der Innenseite des Lagerkörpers. Zur Dauerschmierung dieser Gleitfläche auf der Mantelfläche des Stabilisators 1 sind mit Schmiermittel gefüllte Taschen 7 an der Auflagefläche 6 ausgebildet, und zwar in halbschalenförmigen Bereichen 8 einer radial geringeren Dicke gegenüber der Wanddicke des Kunststofflagers 5. Bei dem Ausführungsbeispiel in den Figuren 2 und 5 sind diese beiden halbschalenförmigen Bereiche 8 durch ebenfalls halbschalenförmige Einlagen 9 aus einem festen Werkstoff begrenzt, mit denen der elastomere Werkstoff des Kunststofflagers 5 beiderseits verbunden ist. Die halbschalenförmigen Bereiche 8 weisen jedoch gegenüber dem elastomeren Werkstoff des Kunststofflagers 5 eine größere Steifigkeit auf. Das Kunststofflager 5 ist in einer durch die Längsachse 10 gelegten Ebene geschlitzt, so daß im vormontierten Zustand ein Schlitz 11 bestimmter Breite entsteht. Diesem Schlitz 11 diametral zur Achse 10 gegenüberliegend ist eine achsparallel dazu verlaufende Nut 12 vorgesehen, die im Beispiel beide die gleiche Breite aufweisen. Der Schlitz 11 ermöglicht das Öffnen des Kunststofflagers 5, so daß es auf den Stabilisator 1 aufgesetzt werden kann. Durch ein schellenförmiges Gehäuse 13 erfolgt die Befestigung an dem Fahrzeugchassis 14 mittels Schrauben 4. Dabei wird das Kunststofflager 5 zusammengedrückt, so daß eine innere Vorspannung entsteht, durch die auch die halbschalenförmigen Bereiche 8 bzw. die Versteifungseinlagen konzentrisch zusammengedrückt werden, bis die sich am Schlitz 11 bzw. in der Nut 12 gegenüberliegenden Begrenzungen in gegenseitige Berührung gelangen und die halbschalenförmigen Bereiche 8 den Stabilisator 1 allseits umschließen, wie es in den Figuren 2 und 3 dargestellt ist. Zur Vermeidung axialer Bewegungen des Kunststofflagers 5 in dem schellenförmigen Gehäuse 13 sind radiale Rippen 15 am Außenumfang des Kunststofflagers 5 angebracht.

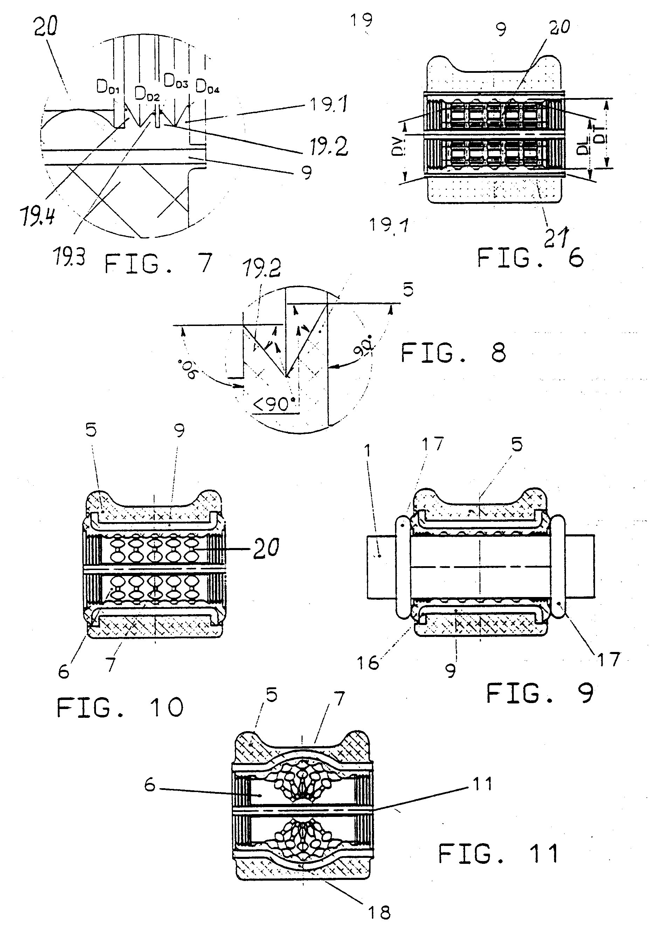

Die Ausbildung der Auflagefläche in den halbschalenförmigen Bereichen 8 des Kunststofflagers ergibt sich deutlicher aus den Figuren 6 bis 8. An den axialen Enden begrenzen umlaufende Dichtlippenringe 19 die Auflagefläche. Zwischen sich radial erstreckenden Wulsten 20 und sich dazwischen axial erstreckenden Längsrippen 21 befinden sich die Taschen 7 für das Schmiermittel. Zur Erzielung einer möglichst optimalen Wirkung verhält sich der Durchmesser DS des Stabilisators 1 zum Durchmesser DV der Radialwülste umgekehrt proportional wie das Verhältnis des Durchmessers DS des Stabilisators 1 zu dem Durchmesser DL der Längsrippen 21. Der Grundkreisdurchmesser ist in Figur 6 mt DT bezeichnet.An den axialen Enden der Auflagefläche sind vier Dichtlippenringe 19.1 bis 19.4 vorgesehen. Die schenkelbildende Seite des jeweils äußeren Dichtlippenringes 19.1 schließt einen nahezu 90° großen Winkel ein, während die innere Schenkelseite mit einem demgegenüber kleineren Winkel zur Dichtlippenkante führ. Der jeweils innere Dichtlippenring 19.4 ist spiegelbildlich symmetrisch gestaltet, so daß die die Innenseite des Dichtlippenringes bildende Schenkelfläche einen Winkel von nahezu 90° mit der Horizontalen einschließt und die gegenüberliegende Schenkelseite mit einem wesentlich kleineren Winkel zur Dichtlippenkante führt. Gleichfalls sind auch die beiden inneren Dichtlippenringe 19.2 und 19.3 entsprechend der vorstehenden Beschreibung spiegelbildlich symmetrisch zueinander ausgebildet. Die Dichtlippenkante der Dichtlippenringe 19.1 und 19.4 sind zum Durchmesser DS des Stabilisators in einem Verhältnis ausgebildet, welches sich umgekehrt proportional zu dem Verhältnis des Durchmessers DS des Stabilisators 1 zu dem Durchmesser DL der Längsrippen 20 verhält. Gleichfalls ist auch das Verhältnis des Durchmessers der inneren Dichtlippenringe 19.2 und 19.3 gestaltet. Die äußeren Dichtlippenringe 19.1 und 19.4 werden somit gegenüber den Dichtlippenringen 19.2 und 19.3 mit doppelter Vorspannung montiert. Durch eine solche Ausbildung wird das Herausquetschen von Fett aus dem Stabilisatorlager und das Eindringen von Schmutz in weit höherem Maße vermieden als es mit bekannten Ausführungsformen möglich ist.

Das Ausführungsbeispiel in den Figuren 9 und 10 zeigt eine Lagerausbildung entsprechend der Darstellung in den Figuren 4 und 5. Abweichend hiervon ist jedoch, daß die halbschalenförmigen Versteifungseinlagen 9 an beiden Enden einen radial nach außen abgewinkelten Flanschrand 16 aufweisen, und daß der Werkstoff der halbschalenförmigen Bereiche 8 sich um diese Abwinkelungen herum auch an der Außenseite der Flanschränder 16 erstreckt. Ein solches Kunststofflager ist zwischen zwei bundartigen Verdickungen 17 auf einem Stabilisator 1 angeordnet, so daß der elastische Werkstoff an den axial äußeren Flächen der Flansche 16 elastische Anschläge an den Bundverdickungen 17 des Stabilisators 1 bilden. Anstelle einer solchen äußeren Anschlagbegrenzung für Axialbewegungen des Stabilisatorlagers auf dem Stabilisator ist in der Figur 11 eine innere axiale Anschlagbegrenzung beispielsweise dargestellt. Hiernach ist die Innenkontur des Kunststofflagers 5 mit einer balligen Erweiterung 18 in Anpassung an eine kugelige Verdickung des Stabilisators ausgebildet, wie es an sich bei Gelenklagern im Fahrwerk eines Kraftfahrzeugs bekannt ist. In diesem Falle ist der Innenkreisdurchmesser der Längsrippem in diametralen Schnittebenen größer als der Durchmesser der Radialwülste zu wählen.

Durch die Reihen-Hintereinanderschaltung des Elastomers und des steiferen Kunststoffes wird die Gesamtsteifigkeit des Lagers entsprechend der im betrieblichen Einsatz erforderlichen Steifigkeit für das Handling des Fahrzeugs beeinflußbar, ohne daß die Funktionstüchtigkeit der Gleitzone beeinträchtigt wird.

## Patentansprüche

1. Lagerung für Stabilisatoren in Kraftfahrzeugen, bei der ein Kunststofflager aus einem elastisch verformbaren Werkstoff in einteiliger, einseitig in einer Achsebene geschlitzter und für die Montage aufklappbarer Ausbildung vorgesehen ist, welches eine innere, auf der Mantelfläche des Stabilisators (1) gleitend beweglichen und an den axialen Enden durch Dichtlippenringe (19.1 - 19.4) begrenzte Auflagefläche aufweist, an der mit einem Schmiermittel gefüllte Taschen (7) zwischen sich radial erstreckenden Wulsten (20) und sich dazwischen axial erstreckenden Längsrippen (21) ausgebildet sind, und welches in einem Gehäuse (13) mit einer inneren Vorspannung auf dem Stabilisator montierbar ist, dadurch gekennzeichnet, daß der Innenkreisdurchmesser (DL) der Längsrippen (21) größer gewählt ist als der Durchmesser (DV) der Radialwülste (20) und an jedem axialen Ende der Auflagefläche mehrere Dichtlippenringe (19) nebeneinander vorgesehen sind, von denen der jeweils innere und der äußere Dichtlippenring (19.1 und 19.4) mit einem Innendurchmesser entsprechend dem Durchmesser (DV) der Radialwülste bemessen ist und wenigstens ein weiterer, zwischen diesen beiden liegender Dichtlippenring (19.2, 19.3) einen Innendurcxhmesser (DL) entsprechend dem Innenkreis der Längsrippen (21) aufweist.

2. Kunststofflager nach Anspruch 1, dadurch gekennzeichnet, daß diejeweils inneren und äußeren Dichtlippenringe (19.1 und 19.4) stärker vorgespannt sind als die dazwischenliegenden Dichtlippenringe (19.2 und 19.3).

3. Kunststofflager nach den Ansprüchen 1 bis 2, dadurch gekennzeichnet, daß die schenkelbildenden Außenseiten der jeweils äußeren Dichtlippenringe (19.1 und 19.4) einen nahezu 90° großen Winkel mit der Horizontalen einschließen und der innere Schenkel dieser Dichtlippenringe mit einem demgegenüber wesentlich kleineren Winkel zur Dichtlippenkante führt.

## Claims

1. Bearing arrangement for stabilizers in motor vehicles, in which a plastic bearing made of an elastically deformable material is provided in a single-part construction which is slit in an axial plane at one side and may be hinged open for assembly, which bearing comprises an internal bearing surface, which is slidable on the lateral surface of the stabilizer (1) and is delimited at the axial ends by sealing lip rings (19.1 - 19.4) and in which pockets (7) filled with a lubricant are formed between radially extending beads (20) and longitudinal ribs (21) extending axially therebetween, and which bearing may be assembled in a housing (13) with internal prestressing on the stabilizer, characterized in that the inner circle diameter (DL) of the longitudinal ribs (21) is selected so as to be greater than the diameter (DV) of the radial beads (20) and at each axial end of the bearing surface a plurality of sealing lip rings (19) are provided alongside one another, of which the inner and the outer sealing lip rings (19.1 and 19.4) are each dimensioned with an inside diameter corresponding to the diameter (DV) of the radial beads and at least one further sealing lip ring (19.2, 19.3) lying between said two sealing lip rings has an inside diameter (DL) corresponding to the inner circle of the longitudinal ribs (21).

2. Plastic bearing according to claim 1, characterized in that the inner and outer sealing lip rings (19.1 and 19.4) are each prestressed to a greater extent than the sealing lip rings (19.2 and 19.3) lying therebetween.

3. Plastic bearing according to claims 1 to 2, characterized in that the limb-forming outsides of the outer sealing lip rings (19.1 and 19.4) are each at an angle of virtually 90° to the horizontal and the inner limb of said sealing lip rings extends at a comparatively much smaller angle to the sealing lip edge.

## Revendications

1. Logement de palier pour stabilisateurs de véhicules automobiles, dans lequel est mis en oeuvre un palier de matière plastique constitué d'un matériau déformable élastiquement dans une forme de réalisation d'une pièce, fendue sur un côté dans un plan axial et rabattable pour le montage, qui présente une surface d'appui interne mobile par glissement sur la surface enveloppe du stabilisateur (1) et délimitée, aux extrémités axiales, par des lèvres d'étanchéité annulaires (19.1 à 19.4), surface sur laquelle sont ménagées des poches (7) remplies d'un agent lubrifiant entre des bourrelets (20) s'étendant radialement entre elles et des nervures longitudinales (21) s'étendant axialement entre eux, et qui peut être montée dans un boîtier (13) avec une précontrainte interne sur le stabilisateur, caractérisé en ce que le diamètre (DL) du cercle interne des nervures longitudinales (21) est choisi plus grand que le diamètre (DV) des bourrelets radiaux (20) et en ce que plusieurs lèvres d'étanchéité annulaires (19) sont disposées l'une à côté de l'autre sur chaque extrémité axiale de la surface d'appui, la lèvre d'étanchéité annulaire respectivement interne et la lèvre d'étanchéité annulaire externe (19.1 et 19.4) étant dimensionnées avec un diamètre interne correspondant au diamètre (DV) des bourrelets radiaux et au moins une autre lèvre d'étanchéité annulaire interne (19.2, 19.3) disposée entre ces deux lèvres annulaires ayant un diamètre interne (DL) correspondant au cercle interne des nervures longitudinales (21).

2. Palier de matière plastique selon la revendication 1, caractérisé en ce que les lèvres d'étanchéité annulaires interne et externe (19.1 et 19.4) sont précontraintes plus fortement que les lèvres d'étanchéité annulaires intermédiaires (19.2 et 19.3).

3. Palier de matière plastique selon les revendications 1 à 2, caractérisé en ce que les côtés externes formant branche des lèvres d'étanchéité annulaires respectivement externes (19.1 et 19.4) forment un angle de presque 90° avec l'horizontale et la branche interne de ces lèvres d'étanchéité annulaires aboutit au bord de la lèvre d'étanchéité avec un angle sensiblement plus petit que celui-ci.
